# FASCICULE DE BREVET EUROPEEN

(11) **EP 1 500 590 B1**
(45) Date de publication et mention de la délivrance du brevet: **28.06.2006**
(21) Numéro de dépôt: 04291815.1
(22) Date de dépôt: 15.07.2004
(51) Int. Cl.: B64G 1/22, B64G 1/64

(54) **Dispositif de libération de tirant de gerbage pour structure déployable**
Auslösevorrichtung eines Niederhaltezugstabes für eine entfaltbare Struktur
Restrainer rod release device for a deployable structure

(30) Priorité: 22.07.2003 FR 0308903
(43) Date de publication de la demande: 26.01.2005
(73) Titulaire: ALCATEL, 75008 Paris (FR)
(72) Inventeur: Legrand, Silvain, 06000 Nice (FR); Chaix, Rodolphe, 83660 Carnoules (FR)
(74) Mandataire: Lamoureux, Bernard

(56) Documents cités:
- US-A- 4 419 033
- US-A- 4 641 798

## Description

La présente invention se rapporte aux dispositifs qui permettent de libérer les tirants de gerbage qui maintiennent en position fermée une structure déployable. Elle s'applique notamment aux satellites artificiels qui comprennent souvent des structures, telles que des panneaux solaires, qui sont repliées contre le corps du satellite pour le lancement et qui sont ensuite déployées lorsque le satellite est mis à poste.

Pour pouvoir déployer la structure maintenue par les tirants, il est connu de sectionner ceux-ci par un dispositif pyrotechnique. La structure est ensuite déployée par des moyens connus en eux-mêmes, tels que par exemple des ressorts.

Le sectionnement s'effectue soit en tête du tirant, soit au pied de celui-ci. Dans le premier cas le tirant reste accroché au corps du satellite. Dans le deuxième cas il reste accroché à la partie la plus extérieure de la structure déployable

La technique où le tirant reste accroché au corps du satellite est la plus favorable au maintien des meilleures performances de la structure déployable. Elle est plus sécurisante pour la cinématique de déploiement, en particulier dans le cas des panneaux solaires. Elle présente toutefois des contraintes car elle nécessite d'amener un dispositif de libération de tirant de gerbage (et son câblage de commande) sur les derniers éléments de la structure à déployer ce qui est source de complications mécaniques.

Un dispositif autodégageant ne faisant pas usage de moyens pyrotechniques mais présentant une certaine complication mécanique est décrit dans le brévet US 4,641,798.

Pour pallier ces inconvénients, l'invention propose un dispositif de libération de tirant de gerbage pour structure déployable, dans lequel des organes destinés à être déployés sont fixés sur des douilles enfilées en superposition sur un tirant solidaire du corps du satellite sur lequel elles sont maintenues par un écrou vissé à l'extrémité libre du tirant, caractérisé en ce qu'il comporte au moins deux modules placés entre l'écrou et la première des douilles et venant exercer sur l'ensemble des douilles un effort important de maintien de l'ensemble, et en ce que ces modules comprennent des moyens élastiques tendant à les écarter du tirant en exerçant des forces latérales pour libérer l'ensemble des douilles de l'action du tirant; l'effort exercé par l'écrou sur les modules permettant de maintenir ceux-ci assemblés par friction en s'opposant aux dites forces latérales, l'ensemble étant stable sous tension de gerbage et permettant la libération au niveau supérieur de la colonne de gerbage , coté structure à déployer par simple diminution de la tension de gerbage, ce qui entraîne un effet autodégageant.

Les deux modules peuvent notamment être en forme de deux demi-coquilles,

Selon une autre caractéristique, les moyens élastiques tentent d'écarter les modules du tirant de gerbage, rendant de ce fait le dispositif instable en position fermée sans tension de gerbage, afin de permettre la libération de la structure déployable.

Selon une autre caractéristique, ces moyens élastiques sont formés de deux lames de ressort plates placées dans les extrémités supérieures respectivement des modules de manière à être horizontales selon leur longueur et verticales selon leur largeur et sensiblement parallèles l'une à l'autre.

Selon une autre caractéristique, ces moyens élastiques sont formés par une coupelle de bras élastiques, fixée sur le tirant et tendant à écarter les modules.

Selon une autre caractéristique, ces moyens élastiques sont formés par des ressorts axiaux placés entre les modules et le tirant.

Selon une autre caractéristique, ces moyens élastiques sont formés par des ressorts tangentiels placés entre les modules eux-mêmes.

Selon une autre caractéristique, les modules comportent à leurs extrémités inférieures deux portions de couronne extérieure plate, et en ce que la première douille présente une géométrie intérieure dans laquelle viennent s'engager les portions de couronnes en position déployée.

La première douille présente une géométrie intérieure qui peut notamment être en forme de gorge circulaire creuse.

Selon une autre caractéristique, le dispositif comprend une entretoise insérée entre l'écrou et les deux modules et sur les côtés de laquelle peuvent venir s'appuyer les moyens élastiques, comme les deux lames ressorties deux lames de ressort.

D'autres particularités et avantages de l'invention apparaîtront clairement dans la description suivante, présentée à titre d'exemple non limitatif en regard des figures annexées qui représentent :
- la figure 1, une vue en coupe d'un dispositif selon l'invention avec une partie des panneaux solaires dans une configuration stockée où ils sont maintenus par le tirant ;
- la figure 2, une vue en perspective cavalière du dispositif de la figure 1 dans la même configuration, mais sans les panneaux solaires;
- la figure 3, une vue en coupe des mêmes organes que dans la figure 1 mais dans une configuration où le tirant est libéré ; la figure 4, une vue en perspective cavalière du dispositif de la figure 3, mais sans les panneaux solaires; et
- les figures 5 à 7, des autres exemples de réalisations particulières des moyens élastiques de dégagement du tirant.

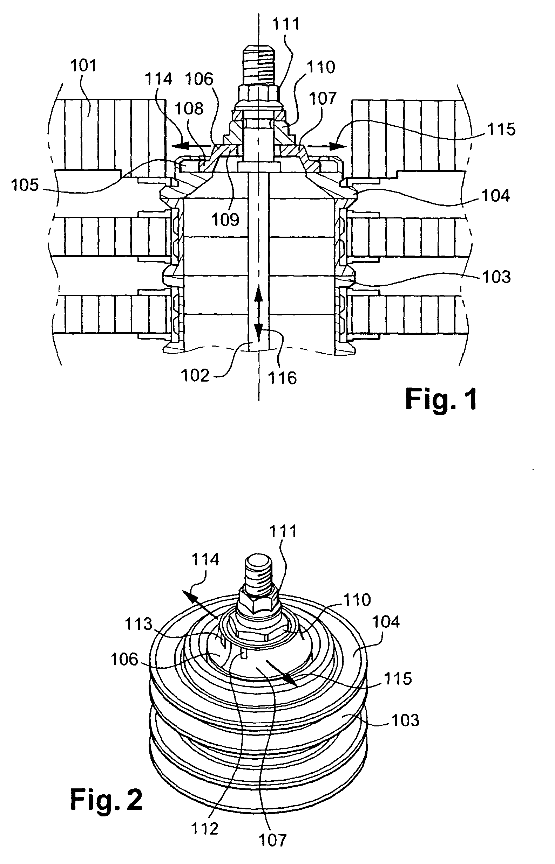

Sur les figures 1 et 2, un ensemble de panneaux solaires 101 est maintenu en position stockée par un tirant 102 à l'aide d'un ensemble de douilles circulaires 103.

La première 104 de ces douilles est modifiée selon l'invention pour pouvoir faire partie du dispositif de libération de l'invention. Pour cela, elle présente à sa partie supérieure une géométrie (dans cet exemple en forme de gorge circulaire) creuse intérieure 105 dont le but est de maintenir des modules (dans cet exemple en forme de portions de coquille) sur la douille 104 lorsque ceux-ci ne sont plus maintenus par le tirant.

Ces modules semi-circulaires 106 et 107 viennent enserrer l'extrémité supérieure du tirant 102 en formant lorsqu'ils sont réunis, une coquille circulaire complète.

Cette coquille présente la forme d'une coupe renversée qui se prolonge sur son extrémité inférieure par une couronne circulaire extérieure plate 108 coupée en n morceaux au niveau de la jonction des modules pour former n portions de couronnes.

La couronne circulaire vient s'engager dans la géométrie 105 de manière à être solidaire de la première douille 104 tout en pouvant coulisser latéralement à l'intérieur de cette géométrie lorsque les modules s'écartent l'un de l'autre.

L'extrémité supérieure plate de la coquille présente quant à elle la forme d'une couronne circulaire intérieure plate et relativement épaisse 109 elle-même coupée en n morceaux au niveau de la jonction des portions de coquilles. C'est cette couronne 109 qui vient enserrer par ses bords intérieurs l'extrémité supérieure du tirant 102, lorsque la coquille est refermée.

Une entretoise standard 110 est enfilée sur l'extrémité supérieure du tirant 102 et vient s'appuyer sur la couronne intérieure 109.

Un écrou de blocage 111 est vissé à l'extrémité supérieure filetée du tirant 102.

Lors de l'assemblage de l'ensemble en position stockée, les modules 106 et 107 sont maintenus en position rassemblée par un outillage adéquat, du genre pince adaptée par exemple, pour former la coquille complète.

Le serrage de l'écrou 111 vient presser l'entretoise 110 sur la face supérieure de la coquille 106, 107. Celle-ci vient elle-même faire appuyer la première douille 104 sur la suivante, puis cette dernière sur la suivante, etc.

Lorsque l'écrou 111 est serré avec un couple suffisant, l'ensemble est maintenu fermement pour rester assemblé jusqu'à ce que soit envoyée la commande de déploiement.

Selon l'invention, des ressorts 112 et 113 peuvent être insérés dans des fentes ménagées dans les extrémités supérieures des modules 106 et 107.

Ces fentes sont placées dans des positions telles que lorsque les demi-coquilles 106 et 107 sont rapprochées l'une de l'autre, les ressorts 112 et 113 viennent s'appuyer sur les côtés latéraux de l'entretoise 110 en se déformant de manière à exercer des forces latérales représentées par les flèches 114 et 115. Ces forces tendent à écarter les modules 106 et 107 en faisant rentrer la couronne circulaire 108 à l'intérieur de la gorge 105 jusqu'au fond de celle-ci.

Les fentes sont aussi placées de sorte qu'en position écartée, le ressort soit plus à l'intérieur des modules que les bords des modules eux-mêmes.

Selon l'invention, le serrage provenant de l'écrou 111 est suffisant pour exercer une tension dans le tirant 102, représentée par la flèche 116, qui permet, par l'effort de frottement de l'entretoise 110 sur l'extrémité supérieure des modules, d'empêcher l'écartement de ces modules dans toutes les circonstances, en particulier les vibrations, se produisant avant la commande de déploiement.

Lorsque le satellite est à poste et qu'il faut déployer les panneaux solaires 101, une commande de déploiement est émise et entraîne, par un dispositif de gerbage connu dans l'art (par exemple un actuateur AMF, ou un écrou de type "écrou pétalable à faibles chocs", le déplacement vertical du tirant et de ce fait entraîne la diminution de la tension dans le gerbage.

Lorsque la tension est suffisamment descendue, la pression qui s'exerce sur l'entretoise 110, et donc la pression de celle-ci sur les modules 106 et 107, passe en dessous de la valeur qui maintient ces dernières assemblées.

L'effort des ressorts 112 et 113 sur les côtés latéraux de l'entretoise 110 permet alors aux modules 106 et 107 de s'écarter en faisant rentrer les portions de la couronne 108 à l'intérieur de la gorge 105, comme expliqué plus haut.

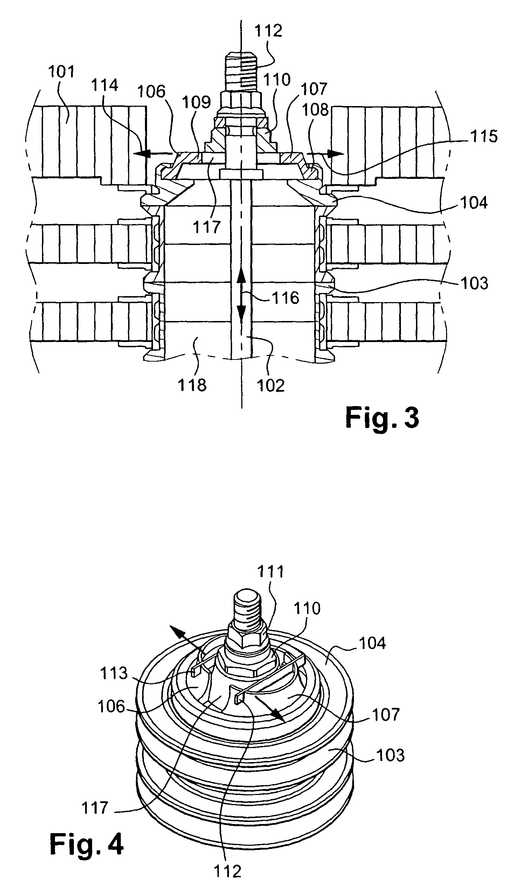

Dans ces conditions, l'espace 117 qui se libère entre ces modules devient plus large que l'entretoise 110, comme on le voit sur les figures 3 et 4.

Les organes de déploiement des panneaux solaires peuvent alors entrer en fonctionnement et dégager dans un premier temps le panneau supérieur, la première douille 104 munie de ses demi-coquilles rétractées au fond de la gorge 105 passant librement autour de l'entretoise 110 puis de l'écrou 111.

Les panneaux solaires suivants se déploient alors les uns après les autres, chacune des douilles 103 venant alors passer encore plus librement autour de l'entretoise et de l'écrou, puisque l'espace interne 118 de ces douilles est encore plus grand que celui qui a été libéré à l'intérieur de la première douille 104 par l'écartement des modules.

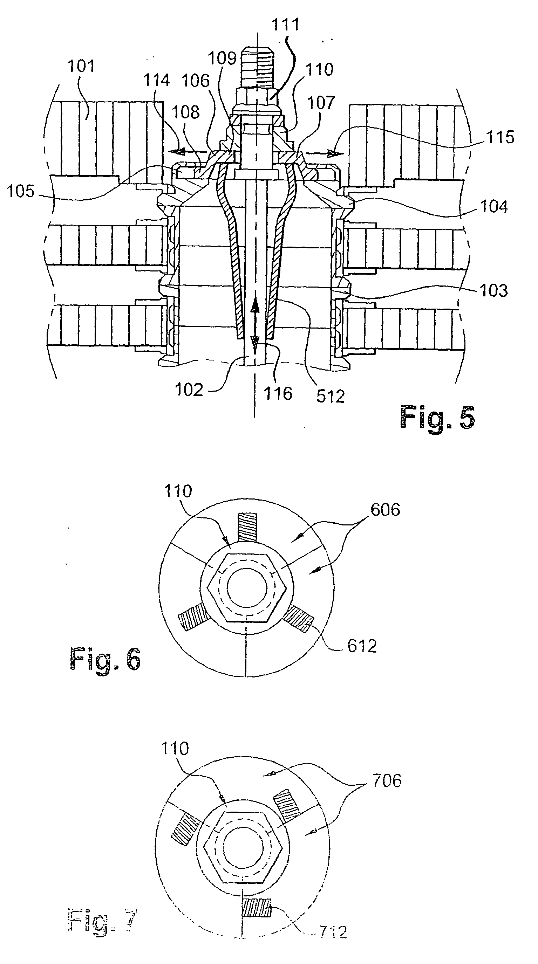

Selon un autre mode de réalisation, représenté en figure 5, ces moyens élastiques sont formés par une coupelle 512 de bras élastiques fixée à son extrémité inférieure sur le tirant et dont les extrémités supérieures tendent à écarter les modules.

Selon un autre mode de réalisation, représenté en figure 6, les modules 606 sont en nombre supérieur à 2, ici 3, et les moyens élastiques sont formés par des ressorts à boudin axiaux 612 placés entre les modules 606 et le tirant sur lequel ils s'appuient.

Selon un autre mode de réalisation, représenté en figure 7, les modules 706 sont en nombre supérieur à 2, ici 3, et les moyens élastiques sont formés par des ressorts à boudin 712 placés tangentiellement entre les modules eux-mêmes de façon à ce que l'effort d'écartement s'exerce directement d'un module à celui placé immédiatement à coté.

## Revendications

1. Dispositif de libération de tirant de gerbage pour structure déployable, dans lequel des organes (101) destinés à être déployés sont fixés sur des douilles (103) enfilées en superposition sur un tirant (102) solidaire du corps du satellite sur lequel elles sont maintenues par un écrou vissé (111) à l'extrémité libre du tirant (102), **caractérisé en ce qu'**il comporte au moins deux modules (106, 107) placés entre l'écrou (111) et la première des douilles (104) et venant exercer sur l'ensemble des douilles un effort important (116) de maintien de l'ensemble, et **en ce que** ces modules (106, 107) comprennent des moyens élastiques (112, 113) tendant à les écarter du tirant en exerçant des forces latérales (114, 115) pour libérer l'ensemble des douilles (104, 103) de l'action du tirant (102); l'effort exercé par l'écrou (111) sur les modules (106, 107) permettant de maintenir ceux-ci assemblés par friction en s'opposant aux dites forces latérales (114, 115), l'ensemble étant stable sous tension de gerbage et permettant la libération au niveau supérieur de la colonne de gerbage, du coté de la structure à déployer, par simple diminution de la tension de gerbage, ce qui entraîne un effet autodégageant.

2. Dispositif selon la revendication 1, dans lequel lesdits moyens élastiques tentent d'écarter lesdits modules dudit tirant de gerbage, rendant de ce fait le dispositif instable en position fermée sans tension de gerbage, afin de permettre la libération de la structure déployable.

3. Dispositif selon la revendication 2, dans lequel lesdits moyens élastiques sont formés de deux lames de ressort plates (112, 113) placées dans les extrémités supérieures respectivement desdits modules de manière à être horizontales selon leur longueur et verticales selon leur largeur et sensiblement parallèles l'une à l'autre.

4. Dispositif selon la revendication 2, dans lequel lesdits moyens élastiques sont formés par une coupelle (512) de bras élastiques fixée sur ledit tirant et tendant à écarter lesdits modules.

5. Dispositif selon la revendication 2, dans lequel lesdits moyens élastiques sont formés par des ressorts axiaux (612) placés entre lesdits modules (606) et ledit tirant.

6. Dispositif selon la revendication 2, dans lequel lesdits moyens élastiques sont formés par des ressorts tangentiels (712) placés entre lesdits modules (706) eux-mêmes.

7. Dispositif selon l'une des revendications 2 à 6, dans lequel lesdits modules comportent à leurs extrémités inférieures deux portions de couronne extérieure plate (108), et dans lequel ladite première douille (104) présente une géométrie intérieure (105) dans laquelle viennent s'engager les portions de couronnes (108) en position déployée.

8. Dispositif selon la revendication 7, dans lequel ladite première douille présente une géométrie intérieure en forme de gorge circulaire creuse.

9. Dispositif selon l'une des revendications 1 à 8, comprenant une entretoise (110) insérée entre ledit écrou et lesdits modules, et sur les côtés de laquelle peuvent venir s'appuyer lesdits moyens élastiques (112, 113).

10. Dispositif selon l'une des revendications 1 à 9, dans lequel lesdits modules sont en forme de deux demi-coquilles.

## Claims

1. A stacking tie-rod release device for a deployable structure in which members (101) that are to be deployed are fixed on bushings (103) threaded in superposition on a tie-rod (102) secured to the body of the satellite against which they are held by a nut (111) screwed onto the free end of the tie-rod (102), the device being **characterized in that** it includes at least two modules (106, 107) placed between the nut (111) and the first of the bushings (104) and exerting a strong force (116) on the set of bushings for holding the assembly together, and **in that** the modules (106, 107) include resilient means (112, 113) tending to space them away from the tie-rod by exerting lateral forces (114, 115) in order to release the set of bushings (104, 103) from the action of the tie-rod (102); the force exerted by the nut (111) on the modules (106, 107) enabling them to be held together by friction opposing said lateral forces (114, 115), the assembly being stable under stacking tension and enabling the top end of the stacking column to be released beside the structure to be deployed merely by reducing the stacking tension, thereby leading to a self-releasing effect.

2. A device according to claim 1, in which the resilient means tend to move said modules away from said stacking tie-rod, thus making the device unstable in its closed position under the stacking tension, thereby enabling the deployable structure to be released.

3. A device according to claim 2, in which said resilient means are formed by two flat spring blades (112, 113) placed in the respective top ends of said modules so as to be horizontal in their length direction and vertical in their width direction, being substantially parallel to each other.

4. A device according to claim 2, in which said resilient means are formed by a bunch (512) of resilient arms each fixed to said tie-rod and tending to move said modules apart.

5. A device according to claim 2, in which said resilient means are formed by axially-directed springs (612) placed between said modules (606) and said tie-rod.

6. A device according to claim 2, in which said resilient means are formed by tangentially-directed springs (712) placed between said modules (706) themselves.

7. A device according to any one of claims 2 to 6, in which said modules include at their bottom ends two flat outwardly-directed rim portions (108), and in which said first bushing (104) presents an inside shape (105) into which the rim portions (108) become engaged when in the deployed position.

8. A device according to claim 7, in which said first bushing presents an inside shape in the form of a hollow circular groove.

9. A device according to any one of claims 1 to 8, including a spacer (110) inserted between said nut and said modules, with said resilient means (112, 113) coming to bear against the sides thereof.

10. A device according to any one of claims 1 to 9, in which said modules are in the form of two half-shells.

## Patentansprüche

1. Auslösevorrichtung eines Niederhaltezugstabes für eine entfaltbare Struktur, bei der die Organe (101) die entfaltet werden sollen, auf Buchsen (103) befestigt sind, die auf einem fest mit dem Körper des Satelliten verbundenen Zugstab (102) übereinander gereiht sind, auf dem sie durch eine Mutter (111) gehalten werden, die am freien Ende des Zugstabes (102) angeschraubt ist, **dadurch gekennzeichnet, dass** sie mindestens zwei Module (106, 107) beinhaltet, die zwischen der Mutter (111) und der ersten Buchse (104) angeordnet ist und auf sämtliche Buchsen eine starke Kraft (116) für den Zusammenhalt des Ganzen ausübt, und **dadurch gekennzeichnet, dass** diese Module (106, 107) elastische Mittel (112, 113) beinhalten, die dazu dienen, sie vom Zugstab zu entfernen, indem seitliche Kräfte (114, 115) ausgeübt werden, um sämtliche Buchsen (104, 103) von der Wirkung des Zugstabes (102) zu befreien; da die durch die Mutter (111) auf die Module (106, 107) ausgeübte Kraft es ermöglicht, diese Module durch Reibung zusammenzuhalten, die diesen seitlichen Kräften (114, 115) entgegenwirkt, ist der Komplex unter Niederhaltespannung stabil und gestattet die Auslösung auf der oberen Ebene der Niederhaltesäule auf der Seite der zu entfaltenden Struktur durch einfache Verringerung der Niederhaltespannung, was einen selbst trennenden Effekt nach sich zieht.

2. Vorrichtung gemäß Anspruch 1, bei der diese elastischen Mittel versuchen, diese Module räumlich von diesem Niederhaltezugstab zu entfernen, **dadurch** die Vorrichtung in der geschlossenen Position ohne Niederhaltespannung instabil machen, um die Auslösung der entfaltbaren Struktur zu ermöglichen.

3. Vorrichtung gemäß Anspruch 2, bei der diese elastischen Mittel aus zwei flachen Federblättern (112, 113) gebildet werden, die jeweils in den oberen Enden dieser Module angeordnet werden, so dass sie gemäß ihrer Länge horizontal und gemäß ihrer Breite vertikal und etwa parallel zueinander sind.

4. Vorrichtung gemäß Anspruch 2, bei der diese elastischen Mittel durch einen Teller (512) mit elastischen Armen gebildet werden, der an diesem Zugstab befestigt ist und dazu dient, diese Module räumlich voneinander zu entfernen.

5. Vorrichtung gemäß Anspruch 2, bei der diese elastischen Mittel durch axiale Federn (612) gebildet werden, die zwischen diesen Modulen (606) und diesem Zugstab angeordnet sind.

6. Vorrichtung gemäß Anspruch 2, bei der diese elastischen Mittel durch tangentiale Federn (712) gebildet werden, die zwischen diesen Modulen (706) selbst angebracht sind.

7. Vorrichtung gemäß einem der Ansprüche 2 bis 6, bei der diese Module an ihren unteren Enden zwei Anteile eines flachen Außenkranzes (108) beinhalten, und bei der diese erste Buchse (104) eine Innengeometrie (105) aufweist, in die die Kranzanteile (108) in der entfalteten Position eingreifen.

8. Vorrichtung gemäß Anspruch 7, bei der diese erste Buchse eine Innengeometrie in Form einer runden Hohlkehle aufweist.

9. Vorrichtung gemäß einem der Ansprüche 1 bis 8, die ein Zwischenstück (110) beinhaltet, das zwischen dieser Mutter und diesen Modulen eingefügt ist, und an dessen Seiten diese elastischen Mittel (112, 113) aufliegen können.

10. Vorrichtung gemäß einem der Ansprüche 1 bis 9, bei der diese Module als zwei Halb-Schalen geformt sind.
